# EUROPEAN PATENT APPLICATION

(11) **EP 1 598 232 A1**
(43) Date of publication of application: **23.11.2005**
(21) Application number: 04252898.4
(22) Date of filing: 19.05.2004
(51) Int. Cl.: B60K 15/04

(54) **Roll-over protected re-circulation nipple**

(71) Applicant: Delphi Technologies, Inc., Troy, MI 48007 (US)
(72) Inventor: Bernard, Jean-Pierre, 4870 Lamadelaine (LU)
(74) Representative: Jones, Keith William

(57) **Abstract**

The present invention relates to a tank fuel system, comprising a filler neck extending from a filler opening towards a fuel tank and a recirculation line, extending between the filler neck and a canister, the recirculation line being connected to the filler neck by means of a nipple which allows vapour recirculation from the filler neck to the recirculation line during refilling, wherein the nipple comprises a nipple line the first end whereof is connected to the recirculation line, which nipple line extends in the filler neck from the connection with the recirculation line, in a direction away from the filler opening.

## Description

The present invention relates to a tank fuel system, comprising a filler neck extending from a filler opening towards a fuel tank and a recirculation line, extending from the tank towards a canister, the recirculation line being connected to the filler neck by means of a nipple which allows vapour recirculation in the filler neck from the recirculation line during refilling.

The recirculation line of the tank fuel system is currently connected to the filler neck by a nipple which allows vapour recirculation during refilling.

This nipple has to be protected against fuel leak from the filler neck in the event of a vehicle roll-over, for instance after a crash, where the recirculation line would be ripped off. The current nipples are protected against leak by an umbrella valve pressed into the nipple plastic plate. This plate should be situated between the filler neck and the recirculation line. The presence of the umbrella valve pressure drop may create problems during refilling, regarding Onboard Refilling Vapour Recovery and nozzle compatibility, and during leak detection. In order to have an operable system, significant compromises may be necessary for some tank fuel systems.

The object of the present invention to provide a roll-over protected recirculation nipple, which allows it to fulfil the system requirements regarding refilling and leak detection, without any negative influence of the ability of the system from the necessity to have roll-over at the same time.

This object is achieved according to the present invention by means of a tank fuel system according to the introduction, which is characterised in that the nipple comprises a nipple line the first end whereof is connected to the nipple, which nipple line extends in the filler neck from the connection with the nipple, in a direction away from the filler opening.

The fact of this measure is that because of the fact that the nipple line extends in the filler neck from the connection with the nipple in a direction away from the filler opening, that a volume or reservoir is formed which one reservoir is capable of receiving fuel in case the vehicle is rotated along its main axis. In case the car is for instance turned over 180 degrees from its normal position, the opening of the filler neck will form the bottom part of the volume of the part for receiving fuel. The maximum amount of fuel to be received in the volume of reservoir is determined by the position of the opening of the nipple line with respect to the filler opening. That means the longer that the nipple line will be, the more fuel can be received by the volume of reservoir in a roll-over position.

Since the nipple line is not provided with any valves or similar devices, the nipple will be open during the refilling and the detection test, with the car in a normal position. When the vehicle is rotated along its main axis to a roll-over position, the fuel will be received in the hat of the filler neck and the level should be below the opening of the nipple line in order to avoid leakage.

With reference to the above it is concluded that the nipple line allows to fulfil refilling and leak detection requirements independently from any valve restriction. That means that there is no compromise needed neither on the refilling or the leak detection side.

According to the present invention it is possible that the nipple line is formed from a plastic material.

Moreover it is possible that the nipple line is connected to the nipple by means of a bracket formed from flexible material, such as rubber.

Moreover it is possible that the nipple line joins a nipple or a connector.

The present invention also relates to a nipple line, especially suitable for the tank fuel system according to each one of the preceding claims.

The present invention also relates to a vehicle comprising a tank fuel system according to one of the claims 1-4.

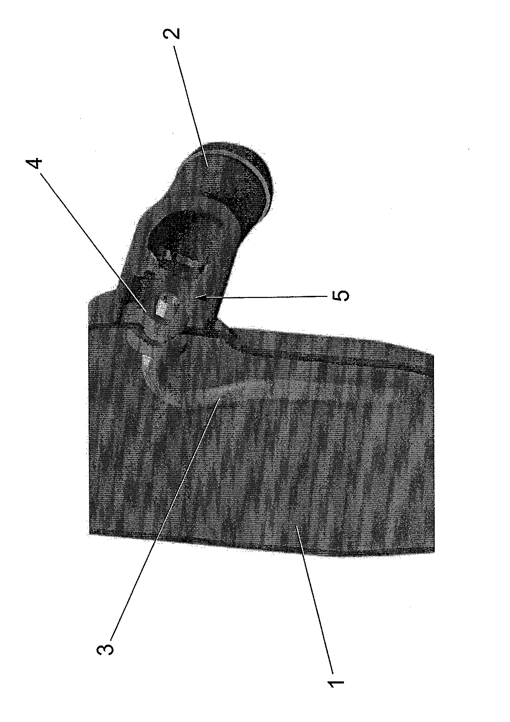

Below, the invention will be explained in detail with reference being made to the drawing.

The drawing is only intended to illustrate the invention and not to limit the scope of the invention as described in the claims.

In the figure the fuel tank system according to the present invention is shown schematically.

The filler neck 1 is connected to the recirculation line 2. During refilling vapour recirculation is possible from the filler neck 1 to the recirculation 2. The recirculation line 2 adjoins the canister and the tank (not shown).

According to the present invention the connection between the filler neck 1 and the recirculation line 2 is obtained by means of a nipple line 3. The nipple 3 is connected in the end part of the recirculation line 2 by means of an flexible connection element, such as a rubber bracket. The rubber bracket is used for leak tight attaching the nipple line 3 in the system.

The first end of the nipple line 3 extends partly in the recirculation line. The first end of the nipple line is connected inside a two-way connector. This connector is not provided with an umbrella valve and that means that there is no further restriction than the revised diameter of the nipple line 3 itself.

A second end of the nipple line 3 extends in the filler neck in a direction away from the filler opening. That means that the nipple line 3 extends from connection with the recirculation line towards the fuel tank.

In case a vehicle, such as a car, is in a roll-over position, the second and the nipple line 3 is directed upwards. Under the second end of the nipple line 3 a volume or reservoir is formed in order to receive and store fuel in this roll-over position. The level of fuel in the reservoir or volume under the second end of the nipple lines 3 should be below nipple line opening, in order to prevent leakage from the filler neck to the recirculation line.

The figure clearly shows that the connection between the filler neck and the recirculation line does not form an obstruction for the flow of vapour from the filler neck towards the recirculation. At the same time the presence of the nipple line provides a leak tight closer of the entry of the recirculation line for prevention of liquid to leak in the recirculation line in a roll-over position.

## Claims

1. Tank fuel system, comprising a filler neck extending from a filler opening towards a fuel tank and a recirculation line, extending between the tank and a canister, the recirculation line being connected to the filler neck by means of a nipple which allows vapour recirculation in the filler neck from the recirculation line during refilling, characterising that, the nipple comprises a nipple line the first end whereof is connected to the nipple, which nipple line extends in the filler neck from the connection with the nipple, in a direction away from the filler opening.

2. Tank fuel system according to claim 1, wherein the nipple line is formed from a plastic material.

3. Tank fuel system according to claim 1 or 2, wherein the nipple line is connected to the nipple by means of a bracket formed from flexible material, such as rubber.

4. Tank fuel system according to claim 1 or 2, wherein the nipple line is connected to the nipple line by means of connecting means, such as a weld.

5. Tank fuel system according to one of the preceeding claims, wherein the nipple line joins a nipple or a connector.

6. Nipple line, especially suitable for the tank fuel system according to each one of the preceeding claims.

7. Vehicle comprising a tank fuel system according to one of the claims 1-4.
